# NOUVEAU FASCICULE DE BREVET EUROPEEN

(11) **EP 0 724 528 B2**
(45) Date de publication et mention de la décision concernant l'opposition: **06.12.2000**
(45) Mention de la délivrance du brevet: 13.08.1997
(21) Numéro de dépôt: 94931077.5
(22) Date de dépôt: 18.10.1994
(51) Int. Cl.: B65B 3/28, B67C 3/20, G01G 13/285

(54) **PROCEDE DE REMPLISSAGE D'UN RECIPIENT AVEC UN POIDS NET DE REFERENCE**
VERFAHREN ZUR FÜLLUNG EINES BEHÄLTERS MIT EINEM REFERENZNETTOGEWICHT
METHOD OF FILLING A CONTAINER WITH A PRODUCT HAVING A NET SET WEIGHT

(30) Priorité: 29.10.1993 FR 9312955
(43) Date de publication de la demande: 07.08.1996
(73) Titulaire: Graffin, André, F-72405 La Chapelle du Bois (FR)
(72) Inventeur: Graffin, André, F-72405 La Chapelle du Bois (FR)
(74) Mandataire: Fruchard, Guy
(86) Numéro de dépôt international: FR9401204
(87) Numéro de publication internationale: WO9511830

(56) Documents cités:
- EP-A- 0 406 092
- EP-A- 0 524 850
- JP-A- 5 019 101
- US-A- 4 676 282

## Description

La présente invention concerne un procédé de remplissage d'un récipient selon le préambule de la revendication 1.

On connaît différents procédés de remplissage d'un récipient avec un poids net de produit. Traditionnellement, le procédé le plus simple consiste à disposer un récipient sur un organe de pesage, le récipient étant lui-même disposé en-dessous d'un organe de remplissage dont l'ouverture et la fermeture sont commandées par l'organe de pesage en fonction du poids apparent qui est mesuré par celui-ci. Le poids apparent comprend non seulement le poids du récipient et le poids net de produit contenu dans le récipient, mais également la force qui résulte du jet de produit sur la surface du produit contenu dans le récipient. Cette force varie non seulement en fonction de l'ouverture de l'organe de remplissage mais également en fonction de la viscosité du produit, de sorte que si la viscosité du produit varie au cours du remplissage, la mesure de poids effectuée par l'organe de pesage est faussée et le poids net réel de produit introduit dans le récipient à la fin du remplissage n'est pas égal au poids net de produit souhaité.

En outre, au moment de la fermeture de l'organe de remplissage, le produit compris entre l'organe de remplissage et la surface de produit dans le récipient, généralement appelé queue de chute, vient augmenter le poids de produit finalement contenu dans le récipient à la fin du cycle de remplissage. Le poids de la queue de chute varie en fonction du diamètre de l'orifice de l'organe de remplissage juste avant la fermeture et de la viscosité du produit. Dans les procédés traditionnels, la pression du jet pendant le remplissage et le poids de la queue de chute doivent donc faire l'objet de compensations pour obtenir finalement dans le récipient le poids net de référence de produit souhaité.

On connaît également du brevet français 2 679 516 un procédé de remplissage consistant à asservir le débit du produit sur un débit de référence et à effectuer le remplissage pendant un temps fixe prédéterminé calculé au préalable en divisant le poids net de référence par le débit de référence. Ce procédé permet d'éliminer les effets de la pression du jet sur la surface du produit contenu dans le récipient en mesurant le débit instantané sur des intervalles de temps successifs pendant lesquels la force du jet de produit sur la surface du produit contenu dans le récipient est supposée constante. Ce procédé est théoriquement très satisfaisant mais en pratique l'asservissement du débit sur un débit de référence ne permet pas d'obtenir un débit réel exactement égal au débit de référence et il est donc nécessaire de procéder à des compensations en effectuant un contrôle du poids net réel après remplissage et en modifiant les paramètres de la boucle d'asservissement pour les cycles de remplissage ultérieurs afin que le poids net réel soit aussi proche que possible du poids net de référence.

On connaît encore, du document JP-A-5-19101 un dispositif de remplissage pondéral dans lequel il est prévu de supprimer l'organe de pesage et de remplacer celui-ci par un débitmètre de Coriolis assurant une mesure du débit instantané couplé à un compteur provoquant un arrêt du remplissage lorsque le compteur indique un poids égal au poids recherché. L'utilisation d'un débitmètre de Coriolis entraîne des erreurs dans la mesure lorsque le dispositif est porté par un carrousel rotatif dont la vitesse de rotation varie au cours du temps.

Un but de la présente invention est de proposer un procédé de remplissage d'un récipient avec un poids net de référence qui soit plus précis que les procédés antérieurs.

En vue de la réalisation de ce but, on propose selon l'invention un procédé utilisant un organe de remplissage et un organe de pesage et comportant les étapes de :
- commander un écoulement de matière par l'organe de remplissage,
- calculer un débit instantané de produit en échantillonnant selon des intervalles de temps le signal de l'organe de pesage et en divisant par la durée de l'intervalle de temps la différence de valeur correspondante du signal échantillonné,
- calculer un poids total de produit introduit dans le récipient à partir du débit instantané sur chaque intervalle de temps, et
- commander un arrêt de l'écoulement de produit lorsque le poids total calculé atteint le poids net de référence diminué d'une queue de chute de produit.

Ainsi, lorsque le débit instantané varie d'un intervalle de temps à un autre, les effets de cette variation sont automatiquement pris en compte dans le calcul du poids total de produit contenu dans le récipient de sorte que le poids net réel de produit contenu dans le récipient après la fermeture de l'organe de remplissage n'est affecté que par les variations de la queue de chute dont l'influence est faible et sur lesquelles une évaluation peut être réalisée avec une grande précision.

Selon une version avantageuse de l'invention, le procédé comporte en outre les étapes de :
- calculer un débit moyen sur plusieurs intervalles de temps à partir du poids total calculé sur ces intervalles de temps,
- comparer le débit moyen calculé à un débit moyen de référence,
- en déduire une consigne de débit, et,
- commander l'organe de remplissage en fonction de la consigne de débit.

Sans que le temps de remplissage soit le paramètre de fermeture de l'organe de remplissage, on obtient ainsi un temps de remplissage très régulier de sorte qu'il est possible de diminuer les temps morts entre les cycles de remplissage et donc de réaliser le remplissage à une cadence très élevée.

Selon un autre aspect avantageux de l'invention, le procédé comporte en outre les étapes de :
- comparer le débit instantané à une consigne de débit, et
- commander l'organe de remplissage en fonction d'un écart entre le débit instantané et la consigne de débit.

Cet aspect de l'invention permet lui aussi de régulariser le temps de remplissage et donc d'améliorer la cadence de remplissage par diminution des temps morts entre les cycles de remplissage.

D'autres caractéristiques et avantages de l'invention apparaîtront à la lecture de la description qui suit d'une version préférée du procédé selon l'invention en référence aux figures ci-jointes parmi lesquelles :
- la figure 1 est une représentation schématique par blocs des étapes de remplissage de la version préférée de l'invention,
- la figure 2 est un diagramme illustrant les débits au cours d'un cycle de remplissage effectué par le procédé selon l'invention.

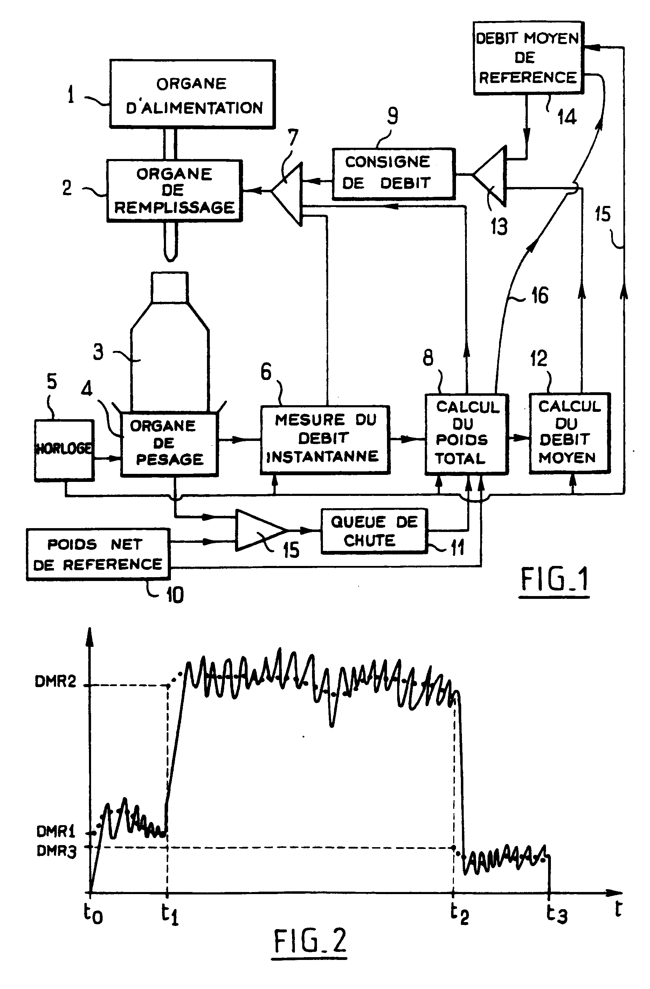

En référence à la figure 1, le procédé selon l'invention est mis en oeuvre par un dispositif comportant d'une façon connue en soi un organe d'alimentation 1 relié à un organe de remplissage 2 disposé au-dessus d'un récipient 3 lui-même porté par un organe de pesage 4. L'organe d'alimentation est par exemple une cuve portée par la plate-forme rotative d'un carrousel ou une cuve séparée du carrousel et reliée à la plate-forme par une canalisation comportant un joint tournant. L'écoulement à partir de l'organe d'alimentation peut être favorisé par une pompe centrifuge. L'organe de remplissage 2 est par exemple une vanne à ouverture variable ou une vis d'Archimède commandée par un moteur pas à pas à vitesse variable, la vitesse du moteur déterminant le débit entraîné par la vis d'Archimède, en particulier dans le cas d'un produit pâteux tel que de la mayonnaise ou d'un produit hétérogène tel qu'une sauce avec des morceaux. On remarquera à ce propos que la commande de l'organe de remplissage ne peut pas être effectuée directement sur une valeur de débit mais sur un paramètre physique (section d'ouverture ou vitesse de rotation de la vis), le débit réel dépendant non seulement du paramètre physique commandé mais d'autres paramètres tels que la densité du produit, sa viscosité et la pression dans le conduit d'alimentation.

Le dispositif comporte également une horloge 5 destinée à donner une base de temps commune aux différents organes assurant la mise en oeuvre du procédé selon l'invention.

Selon la version préférée de l'invention, l'organe de pesage est relié à un organe de calcul du débit instantané 6 relié à un organe de commande 7 et un organe 8 de calcul du poids total de produit dans le récipient. Pour le calcul du débit instantané, le signal de l'organe de pesage 4 est par exemple échantillonné à des intervalles de temps réguliers, par exemple des intervalles de un millième de seconde, une différence est effectuée entre le signal échantillonné à un instant donné et le signal échantillonné à l'instant précédent séparé d'un intervalle de temps, et cette différence est divisée par la durée de l'intervalle de temps. Ce calcul du débit instantané est transmis d'une part à l'organe de commande 7 de l'organe de remplissage, et d'autre part à l'organe de calcul 8 du poids total de produit contenu dans le récipient. L'organe de commande 7 de l'organe de remplissage reçoit par ailleurs une consigne de débit 9 à laquelle le débit instantané mesuré est comparé pour en déduire la commande qui est appliquée à l'organe de remplissage 2.

L'organe de calcul 8 du poids total effectue un calcul du poids élémentaire de produit introduit pendant chaque intervalle de temps dans le récipient en multipliant le débit instantané par la durée d'intervalle de temps, et une sommation des poids élémentaires pour obtenir le poids net total de produit contenu dans le récipient. On remarquera que ce poids net total calculé se distingue du signal transmis par l'organe de pesage, lequel est représentatif non seulement du poids net total de produit contenu dans le récipient mais également du poids du récipient et de la force appliquée par le jet de produit sur la surface libre du produit contenu dans le récipient, ces éléments parasites ayant été éliminés par le calcul préalable du débit instantané. En pratique la sommation est effectuée par une intégration du signal de débit instantané transmise par l'organe de mesure 6 à l'organe de calcul 8 avec une base de temps qui coïncide avec celle ayant servi à mesurer le débit instantané.

Par ailleurs, l'organe de calcul 8 reçoit un signal représentatif du poids net de référence 10 de produit que l'on souhaite introduire dans le récipient et un signal représentatif de la queue de chute 11 correspondant à l'organe de remplissage utilisé et au produit conditionné. L'organe de calcul 8 effectue une comparaison entre le poids net total calculé d'une part et la différence entre le poids net de référence et la queue de chute d'autre part, et envoie à l'organe de commande 7 un ordre d'arrêt d'écoulement lorsque ces deux termes sont égaux.

Dans la version préférée du procédé selon l'invention illustré, l'organe du calcul du poids total envoie également un signal représentatif du poids de produit introduit dans le récipient sur plusieurs intervalles de temps à un organe de calcul du débit moyen 12 qui effectue le calcul du débit moyen sur les intervalles de temps considérés en divisant le poids de produit introduit dans le récipient pendant ces intervalles de temps par la durée de ces intervalles de temps, et envoie ce signal à un organe de comparaison 13 qui reçoit par ailleurs d'un organe d'introduction de débit moyen de référence 14 un signal correspondant au débit moyen souhaité sur ces intervalles de temps. L'organe de comparaison 13 établit le signal de consigne de débit 9 en ajoutant ou en retranchant au débit moyen de référence l'écart entre ce débit moyen de référence et le débit moyen calculé selon que le débit moyen calculé est respectivement inférieur ou supérieur au débit moyen de référence. Le débit moyen de référence est lui-même calculé en divisant le poids net de référence par le temps de remplissage souhaité. Dans le cas d'un remplissage en plusieurs étapes, un débit moyen est calculé pour chaque étape en fonction du poids net de produit devant être introduit pendant chaque étape et du temps de remplissage souhaité pour chaque étape.

La queue de chute est égale au poids du volume de produit compris entre l'organe de remplissage et la surface de produit dans le récipient au moment de l'interruption de l'écoulement. Lorsque les conditions de l'écoulement et la densité du produit conditionné sont constantes, il est donc possible de calculer la queue de chute. Dans le cas où ces valeurs sont irrégulières, il est préférable de mesurer la queue de chute et de la réactualiser après chaque cycle de remplissage. A cet effet on prévoit selon l'invention de mesurer après remplissage avec l'organe de pesage, le poids net réel de produit introduit dans le récipient. Ce poids net réel est calculé de façon connue en soi en déduisant le poids du récipient du poids total mesuré par l'organe de pesage, le poids du récipient étant préalablement mis en mémoire si ce poids est suffisamment constant, ou en mesurant avant remplissage le poids du récipient vide et en déduisant ce poids de façon continue pendant le remplissage. Le signal représentatif du poids net réel est envoyé à un organe de comparaison 15 qui compare ce poids net réel au poids net de référence 10 et en déduit la queue de chute en ajoutant ou en retranchant à la queue de chute antérieure l'écart entre le poids net de référence et le poids net réel selon que le poids net réel est respectivement inférieur ou supérieur au poids net de référence. La valeur initiale de la queue de chute peut être soit évaluée par calcul en fonction des conditions de l'écoulement et de la nature du produit conditionné, soit mesurée en effectuant un premier cycle de remplissage au cours duquel la queue de chute est artificiellement considérée comme nulle, de sorte que l'arrêt de l'écoulement est commandé lorsque le poids total de produit calculé par l'organe de calcul 8 est égal au poids net de référence et le poids net réel mesuré après remplissage est alors supérieur au poids net de référence d'une quantité égale à la queue de chute.

La figure 2 illustre le procédé selon l'invention en relation avec le remplissage d'un récipient avec un kilogramme de produit ayant une densité de 1, le cycle de remplissage comportant trois phases de remplissage. La figure 2 illustre l'évolution des débits en fonction du temps. On a représenté en trait continu les variations du débit instantané en fonction du temps et en traits pointillés, les variations de la consigne de débit en fonction du temps. Chaque cycle de remplissage comporte une première phase se déroulant entre les instants t0 et t1 qui est effectué à faible débit pour introduire une petite quantité de produit destinée à éviter la formation de mousse, cette phase est réalisée à un débit moyen de référence de 50 g/s pendant environ 1 seconde. La seconde phase se déroule entre les instants t1 et t2 est destinée à assurer un remplissage à gros débit aussi rapide que possible, par exemple à un débit moyen de référence de 300 g/s pendant environ 3 secondes. La troisième phase se déroule entre les instants t2 et t3 et est destinée à permettre un arrêt précis de l'écoulement. Cette troisième phase est donc effectuée à faible débit, par exemple 40 g/s pendant environ 1 seconde, la queue de chute pour un jet ayant un diamètre de 12 mm et une longueur de 50 mm étant de l'ordre de 5,6 grammes.

On remarquera que la durée totale du cycle est donnée seulement à titre indicatif puisque l'arrêt de l'écoulement est déterminé par référence au poids total calculé et non par référence à un temps total de cycle. En revanche, le passage d'une phase de remplissage à une autre peut être effectué soit au bout d'un temps fixe commandé par l'horloge 5 comme illustré par la ligne 15 sur la figure 1, par exemple au bout de 1 seconde pour la première phase, soit lorsque le poids total calculé atteint un seuil de poids partiel comme illustré par la ligne 16 entre l'organe de calcul du poids total 8 et l'organe d'introduction du débit moyen de référence sur la figure 1, par exemple 50 grammes dans l'exemple décrit.

Au départ du cycle de remplissage la consigne de débit est égale au débit moyen de référence. Pour chaque phase de remplissage, le calcul du débit moyen est effectué à partir du début de cette phase. Dans l'exemple illustré, le remplissage est donc commencé avec une consigne de débit DMR1 égale au premier débit de référence soit 50 g/s. Pendant les premiers intervalles de temps, l'écoulement s'établit et le débit moyen calculé est donc inférieur au débit moyen de référence de sorte que la consigne de débit est progressivement augmentée comme illustré par la courbe en pointillés sur la figure 2. Lorsque le retard résultant de l'établissement de l'écoulement a été rattrapé, la consigne de débit est progressivement réduite pour devenir voisine du débit moyen de référence. Les courbes réelles du débit instantané et de la consigne de débit dépendent de la vitesse de réaction de chacune des boucles d'asservissement. A l'instant t1 correspondant à la fin de la première phase de remplissage, que celle-ci soit déterminée par un seuil de poids ou par une durée fixée à l'avance, le débit moyen de référence est porté à la valeur DMR2 et la consigne de débit est également modifiée pour être provisoirement portée à cette valeur. De même que précédemment, pendant l'établissement de l'écoulement à cette valeur plus élevée du débit, le débit moyen calculé est en retard sur le débit moyen de référence et la consigne de débit tend tout d'abord à augmenter par rapport au débit moyen de référence. On remarquera à ce propos que dans le cas illustré où la consigne de débit est asservie au débit moyen de référence il suffit de modifier le débit moyen de référence pour que la consigne de débit suive la même évolution à l'intervalle de temps suivant (un millième de sec de dans l'exemple donné).

A l'instant t2 correspondant à la fin de la seconde phase, le débit moyen de référence est porté à la valeur DMR3. Compte tenu de l'inertie de réaction de l'organe de remplissage, le début de la troisième phase de remplissage tend à être réalisé à un débit moyen calculé supérieur au débit moyen de référence DMR3 et la consigne de débit tend alors à passer en-dessous du débit moyen de référence comme illustré par la figure 2.

L'instant t3 correspondant à l'arrêt de l'écoulement est déterminé uniquement par le poids total calculé. Cet instant sera d'autant plus voisin de l'évaluation faite au départ que les courbes de débit instantanées seront plus proches des droites correspondant aux débits moyens de référence.

Bien entendu l'invention n'est pas limitée à la version du procédé décrite ci-dessus et on peut y apporter des variantes de réalisation sans sortir du cadre de l'invention tel que défini par les revendications.

En particulier bien que le procédé selon l'invention ait été décrit en relation avec un cycle de remplissage comportant trois phases de remplissage à un débit moyen de référence constant, la boucle d'asservissement de la consigne de débit en fonction du débit moyen de référence et du débit moyen calculé permet de faire varier de façon continue la consigne de débit par une modification progressive du débit moyen de référence en fonction du poids total calculé. Cette variation continue du débit est très utile dans le cas du remplissage d'un récipient de grande dimension car elle permet notamment de réduire la queue de chute en fin de remplissage par une réduction du débit obtenue en réduisant progressivement le débit moyen de référence jusqu'à un débit moyen de référence minimal précédent de très peu la fermeture de l'organe de remplissage. A titre d'exemple, pour le remplissage d'un bidon de 20 litres d'huile d'une densité de 0,9, soit 18 kg, le cycle de remplissage comprend une première phase pour introduire 1 kg à un débit moyen de référence de 1 000 g/s, soit pendant environ 1 seconde, suivi d'une seconde phase pour introduire 16 kg à un débit moyen de référence de 2 000 g/s, soit pendant environ 8 secondes, et une dernière phase pendant laquelle le débit moyen de référence est diminué de 2 g/s chaque fois que le poids total calculé augmente de 2 g jusqu'à un débit moyen de référence minimal de 50 g/s, soit sur environ 1 seconde, ce qui amène à arrêter l'écoulement avec une queue de chute de l'ordre de 5 grammes seulement. On remarquera également à ce propos que tout changement brutal de débit risque de provoquer un phénomène de pompage sur les boucles d'asservissement. Pour éviter ce pompage on peut effectuer une moyenne sur les signaux de commande par rapport aux signaux de mesure. Par exemple, bien que le calcul du débit instantané soit effectuée à chaque millième de seconde et que le poids total soit calculé à la même fréquence, on peut prévoir d'effectuer une moyenne du débit instantané sur un centième de seconde avant d'effectuer la comparaison avec la consigne de débit au niveau de l'organe de commande 7 ainsi la commande de l'organe de remplissage n'intervient qu'à chaque centième de seconde. Il est en effet important que les signaux de commande ne soient pas envoyés à une fréquence supérieure à celle que l'organe de remplissage est physiquement capable d'exécuter, notamment en raison de l'inertie des pièces à mettre en mouvement. Pour minimiser le pompage on peut également prévoir de modifier le débit moyen de référence de façon progressive à chaque changement de phase.

Par ailleurs, bien que les boucles d'asservissement sur le débit instantané et sur l'établissement d'une consigne de débit soient utiles pour permettre d'obtenir un temps de cycle aussi régulier que possible, il est possible dans le cadre de l'invention, de supprimer ces boucles d'asservissement et de ne conserver que la commande d'arrêt de l'écoulement en fonction du poids total calculé, la commande de l'organe de remplissage étant alors réalisée à une valeur constante (c'est-à-dire une ouverture de section constante ou une vitesse de rotation constante d'une vis d'Archimède) pendant chaque phase de remplissage. Dans ce cas le débit instantané varie alors de façon aléatoire en fonction de la viscosité du produit et de la pression d'alimentation.

On peut également adopter une solution intermédiaire en asservissant seulement le débit instantané ou seulement la consigne de débit. Dans le premier cas la consigne de débit est constante mais le débit instantané est asservi sur cette consigne de débit et est donc régulier autour de cette valeur de consigne.

Dans le second cas, la consigne de débit est asservie sur le débit moyen de référence mais cette consigne de débit est appliquée directement à l'organe de remplissage pour commander le paramètre correspondant (par exemple section de l'ouverture ou vitesse de rotation de la vis d'Archimède) de sorte que le débit instantané, tout en étant voisin de la consigne de débit, dépend de façon aléatoire des conditions de l'écoulement notamment en raison de variations de la pression d'alimentation ou de la viscosité du produit.

## Revendications

1. Procédé de remplissage d'un récipient (3) avec un poids net de référence de produit au moyen d'un organe de remplissage (2) disposé pour introduire le produit dans le récipient alors que celui-ci est porté par un organe de pesage (4), caractérisé en ce qu'il comporte les étapes de :
- commander un écoulement de matière par l'organe de remplissage,
- calculer un débit instantané de produit en échantillonnant selon des intervalles de temps le signal de l'organe de pesage et en divisant par la durée de l'intervalle de temps la différence correspondante du signal échantillonné,
- calculer un poids total de produit introduit dans le récipient à partir du débit instantané sur chaque intervalle de temps, et
- commander un arrêt de l'écoulement de produit lorsque le poids total calculé atteint le poids net de référence diminué d'une queue de chute de produit.

2. Procédé de remplissage selon la revendication 1, caractérisé en ce qu'il comporte en outre les étapes de :
- calculer un débit moyen sur plusieurs intervalles de temps à partir d'un poids total calculé sur ces intervalles de temps,
- comparer le débit moyen calculé à un débit moyen de référence,
- en déduire une consigne de débit, et,
- commander l'organe de remplissage en fonction de la consigne de débit.

3. Procédé selon la revendication 2, caractérisé en ce qu'en fin de remplissage le débit moyen de référence est progressivement réduit en fonction du poids total calculé jusqu'à un débit moyen de référence minimal.

4. Procédé de remplissage selon la revendication 2, caractérisé en ce que le débit moyen de référence est calculé en divisant le poids net de référence par un temps de remplissage souhaité.

5. Procédé de remplissage selon la revendication 4, comportant plusieurs phases de remplissage, caractérisé en ce qu'un débit moyen de référence est calculé pour chaque phase en fonction du poids net de produit devant être introduit pendant chaque phase et du temps de remplissage souhaité pour chaque phase.

6. Procédé de remplissage selon la revendication 1, caractérisé en ce qu'il comporte en outre les étapes de:
- comparer le débit instantané à une consigne de débit, et
- commander l'organe de remplissage en fonction d'un écart entre le débit instantané et la consigne de débit.

7. Procédé de remplissage selon la revendication 1, caractérisé en ce que la queue de chute est déterminée par comparaison entre poids net réel mesuré par l'organe de pesage après remplissage et le poids net de référence.

## Claims

1. A method of filling a receptacle (3) with a reference net weight of substance by means of a filler member (2) disposed to fill the substance into the receptacle while the receptacle is being carried by a weighing member (4), characterized in that the said method comprises the following steps :
- controlling the flow of substance by means of the filler member;
- calculating an instantaneous flow rate of substance by sampling the weighing member signal over time intervals and dividing the corresponding value difference of the sampled signal by the time interval length;
- calculating the total weight of substance filled into the receptacle on the basis of the instantaneous flow rate over each time interval; and
- causing the flow of substance to stop when the calculated total weight reaches the reference net weight minus a tail-back weight for the substance.

2. A method of filling according to claim 1, characterized in that it further includes the following steps:
measuring a mean flow rate over a plurality of time intervals on the basis of the total weight computed over said time intervals;
comparing the computed mean flow rate with a reference mean flow rate;
deducing a flow rate set point therefrom; and
controlling the filler member as a function of the flow rate set point.

3. A method according to claim 2, characterized in that towards the end of filling, the reference mean flow rate is progressively reduced as a function of the computed total weight and down to a minimum reference mean flow rate.

4. A method of filling according to claim 2, characterized in that the reference mean flow rate is computed by dividing the reference net weight by the desired filling time.

5. A method of filling according to claim 4, including a plurality of filling stages, the method being characterized in that the reference mean flow rate is computed for each stage as a function of the net weight of substance that ought to be filled during each stage and as a function of the desired filling time for each stage.

6. A method of filling according to claim 1, characterized in that it further includes the following steps:
comparing the instantaneous flow rate with a flow rate set point; and
controlling the filler member as a function of the difference between the instantaneous flow rate and the flow rate set point.

7. A method of filling according to claim 1, characterized in that the weight of the tail-back is determined by comparing the reference net weight with the real net weight as measured by the weighing member after filling.

## Patentansprüche

1. Verfahren zum Füllen eines Behälters (3) mit einem Produkt mit einem Referenznettogewicht mittels einer Füllvorrichtung (2), die dazu ausgebildet ist, das Produkt in den Behälter einzufüllen, während dieser auf einer Wiegevorrichtung (4) steht, dadurch **gekennzeichnet**, daß es die folgenden Schritte umfaßt:
- Veranlassen der Abgabe des Produktes aus der Füllvorrichtung,
- Berechnen einer momentanen Füllrate des Produktes, indem in Zeitintervallen das Signal der Wiegevorrichtung abgetastet und die entsprechende Differenz des abgetasteten Signals durch die Dauer des Zeitintervalls dividiert wird,
- Berechnen eines Gesamtgewichtes des in den Behälter eingefüllten Produktes auf der Grundlage der momentanen Füllrate für jeden Zeitraum, und
- Veranlassen eines Stoppens der Abgabe des Produktes, wenn das berechnete Gesamtgewicht das Referenznettogewicht, vermindert um das Gewicht einer Nachlaufmenge des Produktes, erreicht hat.

2. Füllverfahren nach Anspruch 1, dadurch **gekennzeichnet**, daß es ferner die folgenden Schritte enthält:
- Berechnen einer durchschnittlichen Füllrate über mehrere Zeiträume auf der Grundlage eines berechneten Gesamtgewichts für diese Zeiträume,
- Vergleichen der berechneten durchschnittlichen Füllrate mit einer Referenz-Durchschnittsfüllrate,
- Ermitteln eines Füllraten-Einstellwertes aus diesem Vergleich, und
- Steuern der Füllvorrichtung in Abhängigkeit des Füllraten-Einstellwertes.

3. Füllverfahren nach Anspruch 2, dadurch **gekennzeichnet**, daß am Ende des Füllvorganges die Referenz-Durchschnittsfüllrate in Abhängigkeit des berechneten Gesamtgewichts kontinuierlich bis auf eine minimale Referenz-Durchschnittsfüllrate sinkt.

4. Füllverfahren nach Anspruch 2, dadurch **gekennzeichnet**, daß die Referenz-Durchschnittsfüllrate durch Dividieren des Referenznettogewichtes durch eine gewünschte Füllzeit berechnet wird.

5. Füllverfahren nach Anspruch 4 mit mehreren Füllstadien, dadurch **gekennzeichnet**, daß für jedes Stadium eine Referenz-Durchschnittsfüllrate in Abhängigkeit des Nettogewichtes des während des jeweiligen Stadiums einzufüllenden Produktes und der für das jeweilige Stadium gewünschten Einfüllzeit berechnet wird.

6. Füllverfahren nach Anspruch 1, dadurch **gekennzeichnet**, daß es ferner die folgenden Schritte enthält:
- Vergleichen der momentanen Füllrate mit einem Füllraten-Einstellwert, und
- Steuern der Füllvorrichtung in Abhängigkeit einer Differenz zwischen der momentanen Füllrate und dem Füllraten-Einstellwert

7. Füllverfahren nach Anspruch 1, dadurch **gekennzeichnet**, daß die Nachlaufmenge durch Vergleichen des tatsächlichen, von der Wiegevorrichtung nach dem Füllen gemessenen Nettogewichtes mit dem Referenznettogewicht ermittelt wird.
